# EUROPÄISCHE PATENTSCHRIFT

(11) **EP 0 230 994 B1**
(45) Veröffentlichungstag und Bekanntmachung des Hinweises auf die Patenterteilung: **31.03.1993**
(21) Anmeldenummer: 87100939.5
(22) Anmeldetag: 23.01.1987
(51) Int. Cl.: G06F 15/20

(54) **Verfahren zur Steuerung des Programmablaufs bei der Formularbearbeitung in Datenverarbeitungsanlagen**
Method of controlling the progress of a programme when processing forms in a data-processing system
Procédé pour la commande du déroulement du programme pour traitement de formulaire dans un dispositif de traitement de données

(30) Priorität: 24.01.1986 DE 3602143
(43) Veröffentlichungstag der Anmeldung: 05.08.1987
(73) Patentinhaber: Siemens Nixdorf Informationssysteme Aktiengesellschaft, 33102 Paderborn (DE)
(72) Erfinder: Mueller, Gerhard, D-1000 Berlin 21 (DE); Pickardt, Hugo, D-4790 Paderborn (DE); Proefrock, Anna-Kristin, D-1000 Berlin 12 (DE)
(74) Vertreter: Fuchs, Franz-Josef, Dr.-Ing.

(56) Entgegenhaltungen:
- EP-A- 0 067 303
- EP-A- 0 075 732
- EP-A- 0 146 714
- US-A- 4 553 860

## Beschreibung

Die Erfindung betrifft ein Verfahren nach dem Oberbegriff des Patentanspruchs 1. Ein solches Verfahren ist aus der EP-A-0 067 303 bekannt.

Im kaufmännisch-administrativen Bereich werden Datenverarbeitungsanlagen hauptsächlich mit zwei Einsatzprinzipien genutzt. Einerseits dienen sie zur Lösung kaufmännischer Sachaufgaben wie z.B. Rechnungsschreibung, Lieferscheinerfassung, Sachkontenfortschreibung, Nettobedarfsrechnung, Lohn- und Gehaltsabrechnung. Solche kaufmännischen Sachaufgaben werden ohne Berücksichtigung der jeweiligen Büroorganisation abgearbeitet, wobei also Daten verarbeitet werden. Andererseits kann eine Datenverarbeitungsanlage auch als Bürokommunikationssystem eingesetzt werden, um die Effektivität rein administrativer Aufgaben zu erhöhen. Hierbei werden vorwiegend Formulare bearbeitet, deren Inhalte durch die Datenverarbeitungsanlage nicht weiter verarbeitet werden. Zusätzlich werden noch Teile der Büroorganisation wie z.B. Kalender, Ordner, Karteien, Adressen usw. erfaßt. Es handelt sich dabei also vorwiegend um das Darstellen von Daten.

Es besteht nun der Wunsch, diese beiden Einsatzprinzipien einer Datenverarbeitungsanlage zu vereinigen, d.h. in einem Textverarbeitungsprogramm Daten zu verarbeiten und in einem Text darzustellen. Dabei soll ein des Programmierens unkundiger Sachbearbeiter für Textausgaben in der Lage sein, ein Formular mit integrierter Datenverarbeitung zu erstellen.

Die EP 0 067 303 A1 zeigt bereits eine Möglichkeit zur Integration der vorstehend erläuterten beiden Einsatzprinzipien einer Datenverarbeitungsanlage, die nicht auf programmtechnischen Maßnahmen beruht.

Zu diesem Zweck werden fünf einfach strukturierte Befehle zur Beschreibung von Datengruppen und deren räumlicher Anordnung auf dem Formular bereitgestellt. Ferner ist noch ein Summierungsbefehl vorgesehen, mit dessen Hilfe die vorgenannten Datengruppen aufaddiert werden können.

Für die Lösung kaufmännischer Sachaufgaben ist allerdings die einfache Aufsummierung von ausgewählten Einzelposten nicht ausreichend. Wie bereits ausgeführt, sollen auch Rechnungen und Lieferscheine erstellt, Konten geführt und Lohn- und Gehaltsabrechnungen durchgeführt werden. Dazu müssen aber neben der Summenbildung z.B. fortlaufende Nummern gebildet oder Kalenderdaten verarbeitet, Prüfziffern errechnet und algebraische Rechnungen durchgeführt werden. Bei den zu bearbeitenden Formularen müssen Preis- mit Mengenangaben multipliziert und Prozentsätze ermittelt werden.

Es ist Aufgabe der Erfindung, ein Verfahren anzugeben, mit dem Daten unterschiedlichen Typs nach unterschiedlichen Bearbeitungsregeln und in beliebiger Reihenfolge miteinander verknüpft werden können.

Diese Aufgabe wird durch die Merkmale des Patentanspruchs 1 gelöst. Vorteilhafte Weiterbildungen sind in den Unteransprüchen angegeben.

Unter einer feldtypischen Datenverarbeitung mit einem Einzelprogramm im Sinne der Erfindung ist die Zuordnung bestimmter Bearbeitungsprogramme zu bestimmten Feldtypen eines Formulars zu verstehen. Bei der Formularbearbeitung gibt es Formulare und Formularfelder unterschiedlicher Typen, nach denen eine Auswahl erfolgen kann. Unterschiedliche Formulartypen sind beispielsweise Lieferscheine, Rechnungen, Gehaltskonten usw. Unterschiedliche Feldtypen sind dadurch definiert, daß sie einem immer wiederkehrenden gleichen Zweck dienen bzw. zur Darstellung gleichartiger Informationsarten vorgesehen sind. Es handelt sich dabei um Felder, in denen beispielsweise eine Adresse, eine Kundennummer, ein Datum, eine Menge, eine Bezeichnung oder ein Preis angegeben werden.

Die Einzelprogramme für einen bestimmten Feldtyp ermöglichen eine Datenverarbeitung speziell für diesen Feldtyp unter Berücksichtigung der dabei erforderlichen und immer wiederkehrenden gleichartigen Vorgänge. Solche Felder, die lediglich fortlaufende Nummern angeben, erfordern ein einfaches Additionsprogramm, während beispielsweise Datumsfelder, die ein Kalenderdatum anzeigen, einer Datenverarbeitung unterzogen werden, die von den Gegebenheiten des Kalenders abhängt.

Wenn nun die Formularspezifikation nicht nur dazu benutzt wird, die Art eines ausgewählten Formulars anzugeben, sondern auch das Zusammensetzen des Formularbearbeitungsprogramms aus feldtypischen Einzelprogrammen vorzugeben, so ermöglicht dies die Datenverarbeitung von Formularinhalten formularspezifisch und doch unabhängig von dem übrigen Anwenderprogramm einer Datenverarbeitungsanlage. Auf diese Weise ist eine Integration der Datenverarbeitung und der Datendarstellung realisiert, bei der die Datendarstellung und die damit verbundene Datenverarbeitung variiert werden kann, ohne umständliche Überarbeitungen eines gesamten Anwenderprogramms zu benötigen.

Das schrittweise Zusammensetzen des Formularbearbeitungsprogramms aus feldtypischen Einzelprogrammen kann nach unterschiedlichen Richtlinien erfolgen. So ist es beispielsweise möglich, die Vorgabe des Zusammensetzens durch die Formularspezifikation so zu gestalten, daß bei Auswahl einer Formularspezifikation dem Benutzer der Datenverarbeitungsanlage die Auswahl der Felder des dargestellten Formulars freigegeben wird, für die er eine Bearbeitung durchführen will. Dies bedeutet eine beiliebige wählbare Reihenfolge der Abarbeitung eines Formularbearbeitungsprogramms, welches während seiner Abarbeitung durch den Benutzer aus feldtypischen Einzelprogrammen zusammengesetzt wird. Es ist aber auch möglich, die Identifizierung der Formularspezifikation zur Feststellung der in ihr enthaltenen Feldbezeichnungen direkt zur Steuerung der Reihenfolge des Aufrufs der Einzelprogramme heranzuziehen. In jedem Falle wird das Identifikationsergebnis der Formularspezifikation zum Zugriff auf gespeicherte Daten genutzt, die dem jeweils identifizierten Feld zugeordnet sind und bearbeitet werden müssen.

Ausführungsbeispiele der Erfindung werden im folgenden an Hand der Figuren beschrieben. Es zeigen:
- Fig. 1: die wichtigsten Komponenten einer Datenverarbeitungsanlage für Datenverarbeitung und Datendarstellung,
- Fig. 2: eine zweite Datenverarbeitungsanlage mit speziellen Komponenten zur Formularbearbeitung und
- Fig. 3: eine schematische Darstellung einer bzw. mehrerer Formularseiten.

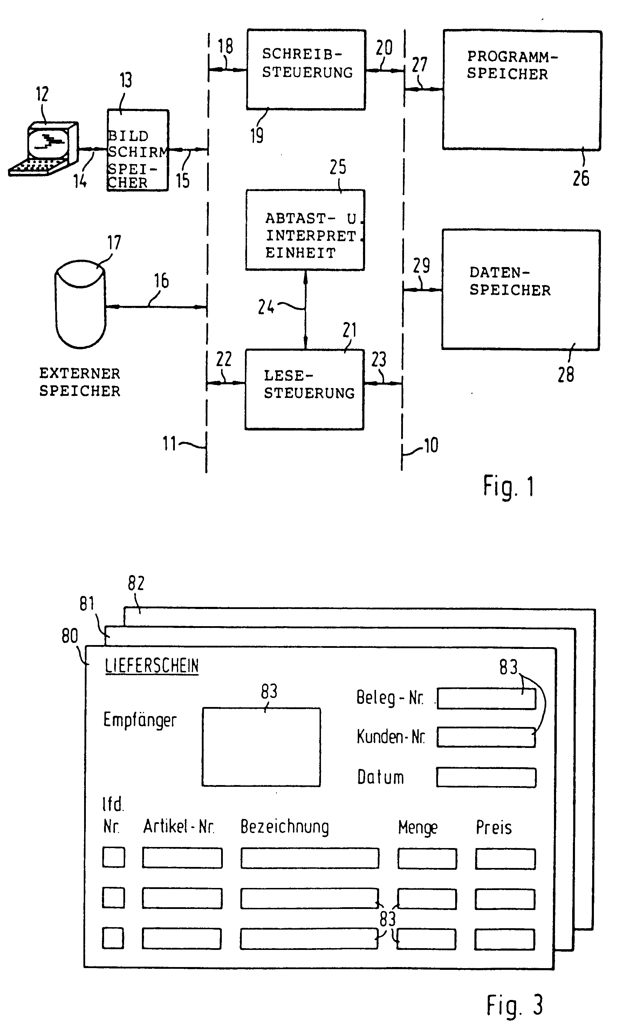

Die in Fig. 1 gezeigte Datenverarbeitungsanlage ermöglicht die Kommunikation zwischen ihren einzelnen Funktionseinheiten über einen internen Bus 10 und einen externen Bus 11, die in der Figur gestrichelt angedeutet sind. An den externen Bus 11 ist ein Bildschirmarbeitsplatz 12 über einen Bildschirmspeicher 13 angeschlossen. Hierzu sind Signalwege 14 und 15 vorgesehen. An den externen Bus 11 ist ferner über einen Signalweg 16 ein externer Speicher 17 angeschlossen, der beispielsweise ein Plattenspeicher o.ä. sein kann.

Ein Signalweg 18 führt vom externen Bus 11 zu einer Schreibsteuereinheit 19, die über einen weiteren Signalweg 20 an den internen Bus 10 angeschlossen ist. Ferner ist eine Lesesteuereinheit 21 vorgesehen, die über einen Signalweg 22 an den externen Bus 11 und über einen Signalweg 23 an den internen Bus 10 angeschlossen ist. Die Lesesteuereinheit 21 steht über einen Signalweg 24 ferner mit einer Abtast- und Interpretationseinheit 25 in Verbindung.

Es sind zwei Internspeicher 26 und 28 vorgesehen, von denen der Internspeicher 26 als Programmspeicher arbeitet und über einen Signalweg 27 an den internen Bus 10 angeschlossen ist, während der Internspeicher 28 als Datenspeicher arbeitet und über einen Signalweg 29 an den internen Bus 10 angeschlossen ist.

Im folgenden werden nun allgemein die Schritte beschrieben, nach denen der Programmablauf so gesteuert werden kann, daß die in den einzelnen Feldern eines Formulars enthaltenen Informationen innerhalb der Datenverarbeitungs-anlage auch verarbeitet, d.h. aus einem Formular entnommen und geändert bzw. Datenverarbeitungsschritten unterzogen werden können.

Zunächst wird über die Tastatur des Bildschirmarbeitsplatzes 12 über den Signalweg 14 als Formularspezifikation ein Datenwort in den Bildschirmspeicher 13 eingegeben, mit dem die Auswahl eines bestimmten gewünschten Formulars aus einem vorhandenen Formularsatz erfolgen soll. Der Inhalt dieses Datenworts wird von dem Bildschirmspeicher 13 dann über die Signalwege 15 und 22 an die Lesesteuerschaltung 21 übergeben, mit der über den Signalweg 24 die Abtast- und Interpretationsschaltung 25 angesteuert wird. Der Inhalt des Datenwortes wird abgetastet und interpretiert, so daß dabei die Spezifikation des gewünschten Formulars erkennbar wird. Diese Spezifikation wird über die Lesesteuerschaltung 21 und die Signalwege 22 und 16 zu dem externen Speicher 17 übermittelt, in dem der für diese Datenverarbeitungsanlage verfügbare Formularsatz gespeichert enthalten ist. Das gewünschte Formular wird in dem externen Speicher 17 adressiert, wonach von dem externen Speicher 17 Informationen über Aufbau und Inhalt dieses adressierten Formulars in Form von Datenworten über die Signalwege 16 und 15 unter Steuerung durch die Schreibsteuerschaltung 19 in den Bildschirmspeicher 13 eingeschrieben werden. Auf diese Weise wird dann an dem Bildschirmarbeitsplatz 12 über den Signalweg 14 das gewünschte Formular in Form einer Formularmaske dargestellt.

Dieser Vorgang ist verbunden mit dem Übertragen von Datenworten aus dem Bildschirmspeicher 13 in den Datenspeicher 28 unter Steuerung durch die Schreibsteuerschaltung 19. Diese Datenworte kennzeichnen die Feldspezifikationen der einzelnen Felder des an dem Bildschirmarbeitsplatz 12 dargestellten Formulars. Die Übertragung der Datenworte erfolgt somit über die Signalwege 15, 18, 20 und 29 in den Datenspeicher 28. Wenn der Datenspeicher 28 diese Datenworte der Feldspezifikationen enthält, kann er sie unter Steuerung durch die Lesesteuerschaltung 21 über die Signalwege 29, 23 und 24 an die Abtast- und Interpretationsschaltung 25 übergeben, die die Datenworte sequentiell auswertet, um für jedes Feld des am Bildschirmarbeitsplatz 12 dargestellten Formulars das erforderliche Einzelprogramm zu ermitteln, mit dem die in diesem Feld dargestellten Informationen zugänglich werden und einer Datenverarbeitung unterzogen werden können. Die Einzelprogramme werden mittels der Lesesteuerschaltung 21 in dem externen Speicher 17 über die Signalwege 22 und 16 adressiert und über die Signalwege 23 und 27 in den Programmspeicher 26 eingeschrieben, so daß dieser schrittweise eine Folge von Einzelprogrammen erhält, die dann wie ein normales Programm abgearbeitet werden können.

Diese Programmfolge ist abhängig von der Aufteilung des am Bildschirmarbeitsplatz 12 jeweils dargestellten Formulars in einzelne Formularfelder und von der Folge der Ansteuerung der einzelnen Formularfelder, die durch den Benutzer am Bildschirmarbeitsplatz 12 oder durch die Formularspezifikation bestimmt wird.

Im Rahmen des Abarbeitens der im Programmspeicher 26 in dieser Weise zusammengestellten Programmlogik kann wie bei jeder normalen Datenverarbeitung eine Anfrage an den Benutzer, eine Reaktion des Benutzers und eine interne Datenverarbeitung durchgeführt werden. Nachdem dies für jeweils ein Feld der am Bildschirmarbeitsplatz 12 dargestellten Formularmaske durchgeführt ist, kann eine derartige Datenverarbeitung für das jeweilige Formular beliebig oft wiederholt werden, wobei jeweils die Datenworte für das jeweilige Formularfeld aus der Feldspezifikation an die Abtast- und Interpretationsschaltung 25 übermittelt werden und abhängig von deren Auswertetätigkeit eine Folge feldbezogener Programmschritte aus dem externen Speicher 17 in den internen Programmspeicher 26 übertragen wird.

Wird ein neues Formular am Bildschirmarbeitsplatz 12 dargestellt, so wiederholt sich das vorstehend beschriebene Verfahren beginnend mit der Eingabe eines Datenwortes zur Formularauswahl über die Tastatur in den Bildschirmspeicher 13.

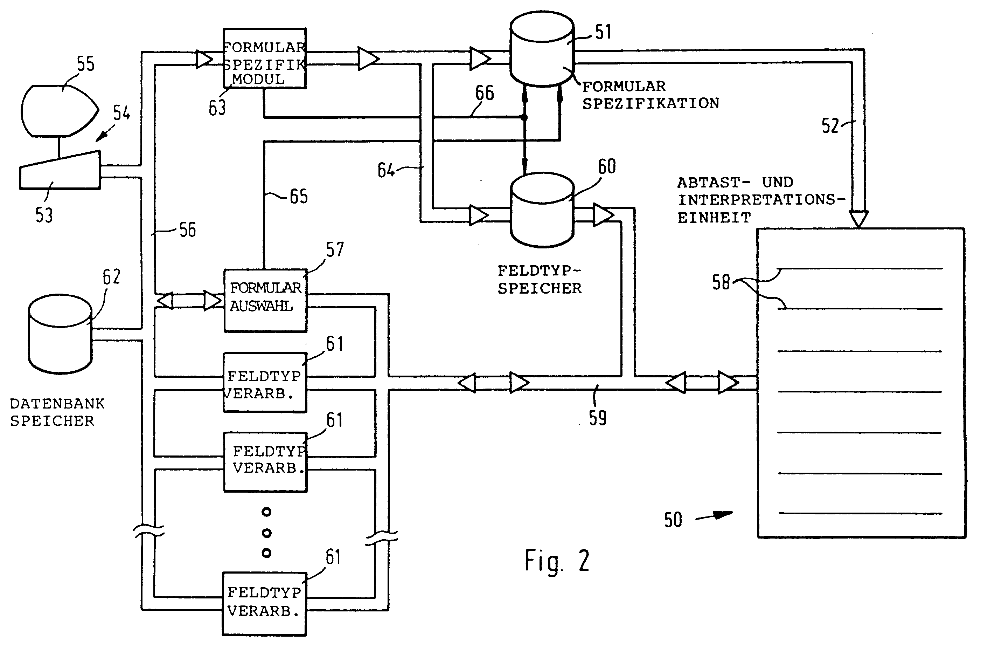

Fig. 2 zeigt den prinzipiellen Aufbau einer weiteren Datenverarbeitungsanlage zur weiteren Erläuterung der Steuerung einer Formularbearbeitung. Darin ist eine Abtast- und Interpretationseinheit 50 als programmierbare Ablaufsteuerung ausgebildet, in die die Daten eines zu bearbeitenden Formulars ladbar sind. Die Daten aller bearbeitbaren Formulare - nachfolgend Formulardaten genannt - sind in einem Formularspeicher 51 als Formularsatz in Form von Formularspezifikationen abgespeichert und gelangen von dort unter Steuerung einer nicht dargestellten Datenverarbeitungs- und Steuereinheit über einen ersten Datenweg 52 in die Abtast- und Interpretationseinheit 50. Die Auswahl des zu bearbeitenden Formulars trifft der Benutzer durch Eingabe eines entsprechenden Steuerbefehls mit der Tastatur 53 seines Bildschirmarbeitsplatzes 54 über einen externen Bus 56 in einem Formularauswahlmodul 57, welcher seinerseits die Speicheradresse der ausgewählten Formularspezifikation bildet und diese zusammen mit einem Lesebefehl über einen ersten Steuerweg 65 an den Formularspeicher 51 gibt.

Jede Formularspezifikation enthält die Koordinaten des Ortes des Formulars auf dem Sichtgerät 55 des Bildschirmarbeitsplatzes 54 sowie einen sequentiellen Satz der Definitionen der das Formular bildenden Felder. Die Felddefinitionen sind derart in der Abtast- und Interpretationseinheit 50 abgespeichert, daß jedem Feld ein eigenes "Fach" 58 zugeordnet ist. In Fig. 2 sind diese "Fächer" symbolisch dargestellt. Jede Felddefinition enthält einen Feldnamen und die Koordinaten des jeweiligen Feldes innerhalb des Formulars.

Die Abtast- und Interpretationseinheit 50 ist über einen internen Bus 59 mit einem Feldtypspeicher 60 verbunden. Dieser beinhaltet u.a. Verweise auf den einzelnen Feldtypen zugeordnete Feldtypverarbeitungsmodule 61. Mit letzteren ist die Abtast- und Interpretationseinheit 50 ebenfalls über den internen Bus 59 verbunden. Alle Feldtypverarbeitungsmodule 61 sind ferner mit dem externen Bus 56 zusammengeschaltet, über den sie auf einen Datenbankspeicher 62 und den Bildschirmarbeitsplatz 54 zugreifen können.

Um dem Benutzer die Erstellung neuer oder die Änderung bestehender Formulare zu ermöglichen, ist der Bildschirmarbeitsplatz 54 über den externen Bus 56 mit einem Formularspezifikationsmodul 63 zu verbinden, der seinerseits über einen zweiten Datenweg 64 auf den Formularspeicher 51 und den Feldtypspeicher 60 zugreifen kann. Die Adressierung und Steuerung der Speicher 51 und 60 durch den Formularspezifikationsmodul 63 erfolgt über einen zweiten Steuerweg 66.

Die Arbeitsweise der Schaltungsanordnung nach Fig. 2 wird nachfolgend unter Bezugnahme auf Fig. 3 beschrieben. In dieser sind als ein Beispiel für ein Bildschirmformular Teile eines Lieferscheins dargestellt. Das Formular kann eine Bildschirmseite 80 ausfüllen oder auch aus weiteren, beliebig vielen Bildschirmseiten 81, 82 aufgebaut sein. Vorzugsweise entspricht die Gestaltung des Bildschirmformulars bzw. die Verteilung von Feldern 83 der des papierenen Formulars, das als Ergebnis des Arbeitsvorganges von einem Drucker ausdruckbar ist.

Wie bereits beschrieben, startet der Benutzer den Bearbeitungsvorgang, indem er einen Steuerbefehl, hier den Befehl "Lieferschein", mit der Tastatur 53 in den Formularauswahlmodul 57 eingibt. Das Formular wird als Bildschirmmaske auf dem Sichtgerät 55 dargestellt, d.h. die Feldbezeichnungen "Empfänger", "Kundennummer", "Datum" usw. werden auf dem Bildschirm angezeigt, während die zugehörigen Felder 83 entweder vom Benutzer über die Tastatur 53 oder im Verlauf der Abarbeitung des Formulars von den Feldtypverarbeitungsmodulen 61 ausgefüllt werden. Die zur Darstellung der Bildschirmmaske erforderlichen Daten werden von der Abtast- und Interpretationseinheit 50 über den internen Bus 59, den Formularauswahlmodul 57 sowie den externen Bus 56 dem Sichtgerät 55 zugeführt. Gegebenenfalls trifft der Benutzer mit einem weiteren Steuerbefehl noch eine Bearbeitungsauswahl (z.B. "Erstellen", "Ändern", "Anzeigen"). Der Formularauswahlmodul 57 veranlaßt in diesem Beispiel das Laden der Formularspezifikation des Lieferscheinerstellungsformulars aus dem Formularspeicher 51 in die Abtast- und Interpretationseinheit 50 derart, daß von jedem Feld 83 ein "Fach" 58 belegt wird.

Mit Beginn der Formularbearbeitung wird von der Abtast- und Interpretationseinheit 50 der Inhalt des ersten Fachs 58 zur Abarbeitung bereitgestellt. Dabei wird zunächst aus einem im Feldtypspeicher 60 abgespeicherten Feldnamenverzeichnis der dem Feld zugeordnete Feldtyp ermittelt. Jedem Feldtyp ist, wie bereits erwähnt, ein Feldtypbearbeitungsmodul 61 zugeordnet.

So sind beispielsweise die Felder "Beleg-Nr." und "Kunden-Nr." sogenannte Identifizierungsfelder. Das Feld "Datum" ist ein Feld vom Datumstyp. Das Feld "Artikel-Nr." ist als ein Identifizierungsfeld mit eingebetteter Identität zu bezeichnen, weil der Artikel-Nr. weitere Informationen wie Artikelbezeichnung und Preis zugeordnet sind. Die Felder "Menge" und "Preis" sind Wertfelder, und die Felder "Empfänger" und "Bezeichnung" sind Textfelder. Weitere Feldtypen sind denkbar. Es sind so viele Feldtypen und damit Feldtypverarbeitungsmodule 61 realisiert, wie es in diesem System Datenarten mit zugehöriger Verarbeitungsroutine gibt.

So wird beispielsweise der Kalenderdatumstyp benötigt, weil ein Kalenderdatum einer speziellen Verarbeitung unterworfen wird. Es muß das eingegebene Datum z.B. auch daraufhin abgeprüft werden, ob dieser Tag im Kalender vorkommt.

Bei den Identifizierungsfeldern wird eine Prüfziffernberechnung durchgeführt. Bei den Wertfeldern müssen algebraische Rechnungen durchführbar sein usw.

Nachdem nun der Feldtyp ermittelt und damit der zugehörige Feldtypverarbeitungsmodul 61 zugeordnet ist, werden an diesen die Felddefinitionsdaten übergeben. Die für das Feld zur Bearbeitung benötigten Daten werden vom Feldtypverarbeitungsmodul 61 aus der Datenbank 62 abgerufen und Bearbeitungsergebnisse dort abgestellt. Die in dem entsprechenden Feld 83 des Bildschirmformulars anzuzeigenden Informationen werden an das Sichtgerät 55 ausgegeben.

Hat der Feldtypverarbeitungsmodul 61 seine Arbeit beendet, meldet er dies über den internen Bus 59 an die Abtast- und Interpretationseinheit 50, die daraufhin den Inhalt des nächsten Fachs 58 zur Verfügung stellt. Dieser wird in der vorbeschriebenen Weise abgearbeitet. Diese Vorgänge wiederholen sich, bis alle Fächer 58 abgearbeitet sind. Es ist dabei nicht erforderlich, daß das Bildschirmformular in der Reihenfolge der Felder 83 bearbeitet wird. Da, wie beschrieben, die Felddefinitionen u.a. die Koordinaten des jeweiligen Feldes 83 innerhalb des Formulars enthalten, kann jedes Feld an jeder beliebigen Stelle des Formulars auch über Bildschirmseitengrenzen hinweg angeordnet sein. Die Reihenfolge der Feldbearbeitung hingegen wird nur durch die Reihenfolge der Felddefinitionssätze in der Abtast- und Interpretationseinheit 50 bestimmt.

So kann für das in Fig. 3 gezeigte Beispiel zunächst das Feld "Beleg-Nr.", dann das Feld "Datum" und darauf das Feld "Kunden-Nr." bearbeitet werden, obwohl die in Fig. 3 gezeigte Reihenfolge auf dem Bildschirm eine andere ist.

## Patentansprüche

1. Verfahren zur Steuerung des Programmablaufs bei der Formularbearbeitung in Datenverarbeitungsanlagen für zu verarbeitende Dateninhalte eines aus Feldern aufgebauten Formulars, bei dem die bildliche Darstellung des Formulars, das Lesen und Einblenden der für dieses Formular relevanten Daten, das Manipulieren dieser Daten durch den Benutzer und das Verarbeiten dieser Daten durch ein dem Formular fest zugeordnetes Formularbearbeitungsprogramm veranlaßt wird, wobei einer Formularspezifikation zusätzlich Datenworte als Feldspezifikationen der einzelnen Felder des Formulars zugeordnet sind, die in Verbindung mit der Formulardarstellung gelesen und sequentiell ausgewertet werden, um für jedes Feld in dieser Auswertung entsprechender Folge ein Einzelprogramm zu adressieren, und wobei die so adressierten Einzelprogramme nacheinander abgearbeitet werden, dadurch **gekennzeichnet**, daß in einem Formularspeicher mehrere Formularspezifikationen bereit gehalten werden, daß eine ausgewählte Formularspezifikation aus dem Formularspeicher feldweise in eine Abtast- und Interpretationseinheit geladen wird, daß die so aufgeteilte Formularspezifikation feldweise abgearbeitet wird, indem die Definitionsdaten eines jeden Feldes zur Ermittlung des jeweiligen Feldtyps mit einem in einem Feldtypspeicher gespeicherten Namensverzeichnis verglichen werden, und daß die Definitionsdaten eines jeden Feldes einem seinem Feldtyp zugeordneten Feldtyp-Verarbeitungsmodul zugeführt werden, in dem eine feldtypische Verarbeitung von Daten in Kommunikation mit einem Felddatenspeicher gemäß einem Einzelprogramm durchgeführt wird.

2. Verfahren nach Anspruch 1, dadurch **gekennzeichnet,** daß die jeweilige Formularspezifikation zur Identifizierung in ihr enthaltener Feldbezeichnungen ausgewertet wird und daß abhängig von dem Identifikationsergebnis die Einzelprogramme aufgerufen werden.

3. Verfahren nach Anspruch 1 oder 2, dadurch **gekennzeichnet,** daß auch die Reihenfolge des Aufrufs der Einzelprogramme durch die Formularspezifikation vorgegeben wird.

4. Verfahren nach Anspruch 2 oder 3, dadurch **gekennzeichnet,** daß der Aufruf des jeweiligen Einzelprogramms in Zuordnung zu dem aus dem Identifikationsergebnis ermittelten Feldtyp erfolgt.

5. Verfahren nach Anspruch 4, dadurch **gekennzeichnet,** daß das Identifikationsergebnis zum Zugriff auf dem jeweils identifizierten Feld zugeordnete gespeicherte Daten genutzt wird.

6. Verfahren nach Anspruch 1, dadurch **gekennzeichnet,** daß die Definitionsdaten auch zur Sichtdarstellung der Formularmaske genutzt werden.

## Claims

1. Method of controlling program execution when processing forms in data processing systems for data contents of a form constructed from fields to be processed, in which the visual representation of the form, the reading and displaying of the data relevant for said form, the manipulation of said data by the user and the processing of said data is initiated by a form processing program permanently assigned to the form, in which data words are additionally assigned to a form specification as field specifications of the individual fields of the form, which data words are read and sequentially evaluated in connection with the form representation in order to address an individual program for each field in the order corresponding to said evaluation, and in which the individual programs addressed in this manner are successively processed, characterised in that a plurality of form specifications are provided in a form memory, in that a selected form specification is loaded field-by-field from the form memory into a scanning and interpretation unit, in that the form specification divided in this way is processed field-by-field in that the definition data of each field are compared with a name directory stored in a field type memory to determine the respective field type, and in that the definition data of each field are supplied to a field type processing module assigned to its field type, in that a field-typical processing of data is executed in communication with a field data memory in accordance with an individual program.

2. Method according to Claim 1, characterised in that the respective form specification is evaluated to identify field designations contained therein, and in that the individual programs are called up depending on the identification result.

3. Method according to Claim 1 or 2, characterised in that the order in which the individual programs are called up is also prescribed by the form specification.

4. Method according to Claim 2 or 3, characterised in that the respective individual program is called up in accordance with the field type determined from the identification result.

5. Method according to Claim 4, characterised in that the identification result is used for accessing the stored data assigned to the respective identified field.

6. Method according to Claim 1, characterised in that the definition data are also used for the visual representation of the form mask.

## Revendications

1. Procédé pour commander le déroulement d'un programme lors du traitement de formulaires dans des installations de traitement de données pour des contenus de données, devant être traités, d'un formulaire constitué par des zones, selon lequel la représentation de l'image des formulaires, la lecture et l'insertion des données importantes pour ce formulaire, la manipulation de ces données par l'utilisateur et le traitement de ces données sont déclenchés par un programme de traitement de formulaires, qui est associé de façon fixe au formulaire, et selon lequel à une spécification de formulaire sont associés en supplément des mots de données sous la forme de spécifications des différentes zones du formulaire, qui sont lues et évaluées séquentiellement en liaison avec la représentation du formulaire, pour l'adressage d'un programme individuel pour chaque zone lors de cette évaluation à une séquence correspondante, et selon lequel les programmes individuels ainsi adressés sont traités successivement, caractérisé par le fait que plusieurs spécifications de formulaires sont déjà conservées dans une mémoire de formulaires, qu'une spécification sélectionnée de formulaire est chargée zone par zone depuis la mémoire de formulaires dans une unité d'exploration et d'interprétation, que la spécification de formulaire ainsi subdivisée est traitée zone par zone par le fait que les données de définition de chaque zone sont comparées, pour la détermination du type de zones respectif, à une nomenclature mémorisée dans une mémoire de type de zones, et que les données de définition de chaque zone sont envoyées à un module de traitement du type de zone, associé à son type de zone et dans lequel un traitement de données, typique pour les zones, est exécuté en communication avec une mémoire de données de zones conformément à un programme individuel.

2. Procédé suivant la revendication 1, caractérisé par le fait que la spécification respective de formulaires est évaluée pour l'identification des désignations de zones, qu'il contient, et que les programmes individuels sont appelés en fonction du résultat d'identification.

3. Procédé suivant la revendication 1 ou 2, caractérisé par le fait que la séquence d'appel des programmes individuels est prédéterminée par la spécification des formulaires.

4. Procédé suivant la revendication 2 ou 3, caractérisé par le fait que l'appel du programme individuel respectif s'effectue en association avec le type de zones déterminé à partir du résultat d'identification.

5. Procédé suivant la revendication 4, caractérisé par le fait que le résultat d'identification est utilisé pour accéder à des données mémorisées qui sont associées à la zone respectivement identifiée.

6. Procédé suivant la revendication 1, caractérisé par le fait que les données de définition sont également utilisées pour visualiser le masque de formulaire.
